# EUROPÄISCHE PATENTSCHRIFT

(11) **EP 1 413 128 B1**
(45) Veröffentlichungstag und Bekanntmachung des Hinweises auf die Patenterteilung: **21.02.2007**
(21) Anmeldenummer: 02762415.4
(22) Anmeldetag: 30.07.2002
(51) Int. Cl.: H04M 11/06

(54) **VERFAHREN ZUM DEAKTIVIEREN VON SENDEEMPFANGSEINRICHTUNGEN IN EINEN BEREITSCHAFTSZUSTAND UND WARMSTARTMÖGLICHKEIT**
METHOD FOR DEACTIVATING TRANSMITTER/RECEIVER DEVICES IN STANDBY MODE AND WARM START POSSIBILITY
PROCEDE DE DESACTIVATION ET MISE EN MODE VEILLE DE DISPOSITIFS EMETTEURS-RECEPTEURS ET POSSIBILITE DE DEMARRAGE A CHAUD

(30) Priorität: 03.08.2001 DE 10139777
(43) Veröffentlichungstag der Anmeldung: 28.04.2004
(73) Patentinhaber: Infineon Technologies AG, 81669 München (DE)
(72) Erfinder: HEISE, Bernd, 81825 München (DE)
(74) Vertreter: Reinhard - Skuhra - Weise & Partner
(86) Internationale Anmeldenummer: PCT/EP2002/008481
(87) Internationale Veröffentlichungsnummer: WO 2003/015386

(56) Entgegenhaltungen:
- US-A- 5 852 630
- "Transmission and Multiplexing (TM);Integrated Services Digital Network (ISDN) basic rate access;Digital transmission system on metallic local lines " ETSI TS 102 080 V1.3.2, Mai 2000 (2000-05), Seiten 1-111, XP002236049

## Beschreibung

Die Erfindung betrifft allgemein ein Deaktivieren von vermittlungsseitigen und teilnehmerseitigen Sendeempfangseinrichtungen, und betrifft insbesondere ein Verfahren zum Übertragen von zu übertragenden Datenströmen, bei dem mindestens eine Sendeempfangseinrichtung in einen Bereitschaftszustand deaktivierbar ist.

Für viele in der Praxis wichtige Datenübertragungsverfahren besteht keine Möglichkeit, einen Übertragungsmodus zu deaktivieren, um in vorteilhafter Weise eine Sendeempfangseinrichtung in einen Energiesparmodus zu versetzen und andererseits einen effektiven und schnellen Warmstart bereitgzustellen.

Bei xDSL-Technologien handelt es sich um verschiedene Nutzungsarten/Trägerverfahren für Leitungen, auf das paket- oder zeilenorientierte Protokolle aufgesetzt werden können. So werden DSL (Digital Subscriber Line = digitale Schnittstellenleitung), ADSL (asymmetrisches DSL), SDSL (Single Line DSL = Einzelleitungs-DSL), HDSL (High Data Rate DSL = hochdatenratiges DSL) und eine Kombination der letzten beiden Übertragungsverfahren, S(H)DSL auf herkömmlichen Telefonleitungen von einer vermittlungsseitigen Sendeempfangseinrichtung zu einer teilnehmerseitigen Sendeempfangseinrichtung eingesetzt.

Für derartige Übertragungsverfahren ist in nachteiliger Weise bisher eine Warmstartmöglichkeit nicht vorgesehen.

Verfahren nach dem Stand der Technik stellen für ISDN (Integrated Services Digital Network) Warmstartmöglichkeiten bereit, wie z.B. vermittlungsseitig für eine Datenübertragungsrate von 144 kBit in "ETSI TS 102 080, Integrated Services Digital Network (ISDN) basic rate access, Third Edition, November 1998" und der Publikation "ANSI T1, 601-1988, Integrated Services Digital Network (ISDN), ANSI, September 1988" beschrieben.

Insbesondere für S(H)DSL-Übertragungsverfahren gibt es bisher keine Möglichkeit, nach einer Deaktivierung eines Datenübertragungspfades einen Warmstart durchzuführen, wie beispielsweise in "ITU-T G.991.2, Single-pair high-speed digital subscriber line (SHDSL) transceivers", "ETSI TS 101 524 Symmetric single pair high bit rate digital subscriber line (SDSL)" beschrieben.

Im "Deactivation Text Proposal" der Literaturstelle "Adtran, Deactivation Text Proposal, Helsinki, May 2000, 002t35a0" ist in nachteiliger Weise kein Widerruf einer Deaktivierung möglich, da u.a. ohne Synchronisierungsfehlersignale bei einer Übertragung von zu übertragenden Datenströmen gearbeitet wird.

Herkömmliche Verfahren und Vorrichtungen zur Übertragung von zu übertragenden Datenströmen erfordern somit langwierige Kaltstarts, d.h. eine Aktivierung und eine Adaptierung von vermittlungsseitigen Sendeempfängern und teilnehmerseitigen Sendeempfängern auf Leitungseigenschaften eines Datenübertragungspfades.

In nachteiliger Weise wird für einen derartigen Anpassvorgang eine typische Zeitdauer von 30 Sekunden oder mehr benötigt. Wären Warmstarts möglich, könnten Aktivierungen einer deaktivierten Leitung bzw. eines deaktivierten Datenübertragungspfades auf der Kenntnis der Leitungseigenschaften in einem Bruchteil der o.a. Zeitdauer (30 Sekunden) ausgeführt werden, was einen erheblichen Vorteil beim Aufbau einer Datenübertragungsleitung mit sich bringen würde.

Verfahren und Vorrichtungen nach dem Stand der Technik verbrauchen in nachteiliger Weise eine Energie, insbesondere in den vermittlungsseitigen Sendeempfangseinrichtungen und den teilnehmerseitigen Sendeempfangseinrichtungen, auch dann, wenn der mindestens eine zu übertragende Datenstrom keine Nutzdaten enthält.

In der Publikation US 5,852,630 sind ein Verfahren und eine Vorrichtung für eine Warmstartaktivierungsprozedur für einen RADSL-Sendeempfänger offenbart, wobei eine Verbindungszeit, die erforderlich ist, um einen zuverlässigen Kommunikationspfad wieder einzurichten, reduziert werden soll. Hierbei werden Precoder- und Equalizer-Koeffizienten in einem Speicher gespeichert und bei einem Warmstart wieder verwendet. Bei dem in der US 5,852,630 angegebenen Verfahren ist es jedoch sehr nachteilig, dass eine teilnehmerseitige Sendeempfangseinrichtung auf einen Empfang eines Deaktivierungssignals hin sofort in einen Bereitschaftszustand (standby mode) übergeht.

Es ist daher eine Aufgabe der vorliegenden Erfindung, ein Verfahren zum Übertragen von zu übertragenden Datenströmen und eine Vorrichtung zur Durchführung des Verfahrens zu schaffen, bei welchen mindestens eine Sendeempfangseinrichtung auf einer Vermittlungsseite und/oder mindestens eine Sendeempfangseinrichtung auf einer Teilnehmerseite in einen Bereitschaftszustand deaktivierbar ist, derart, dass eine anschließende Aktivierung als ein Warmstart ausgeführt werden kann, wobei eine von der mindestens einen Sendeempfangseinrichtung auf der Vermittlungsseite angeforderte Deaktivierung in einen Bereitschaftszustand von der mindestens einen Sendeempfangseinrichtung auf der Teilnehmerseite widerrufbar ist.

Diese Aufgabe wird erfindungsgemäß durch das im Patentanspruch 1 angegebene Verfahren sowie durch eine Vorrichtung mit den Merkmalen des Patentanspruchs 7 gelöst.

Weitere Ausgestaltungen der Erfindung ergeben sich aus den Unteransprüchen.

Ein wesentlicher Gedanke der Erfindung besteht darin, mindestens eine vermittlungsseitige Sendeempfangseinrichtung und/oder mindestens eine teilnehmerseitige Sendeempfangseinrichtung in einen Energiesparmodus zu versetzen, welcher einen anschließenden Warmstart zulässt, derart, dass ein Deaktivierungsverfahren in einen Bereitschaftszustand deaktiviert wird, welches u.a. folgende Merkmale aufweist:
(i) Bestimmen eines Initiators (vermittlungsseitige Sendeempfangseinrichtung, teilnehmerseitige Sendeempfangseinrichtung, etc.) einer Deaktivierung;
(ii) Übermittlung einer Information an eine entsprechende Gegenstelle, dass eine Deaktivierung ausgeführt wird;
(iii) Sicherstellung, dass beide Seiten, d.h. die Vermittlungsseite und die Teilnehmerseite, vermittlungsseitige Übertragungskoeffizienten des mindestens einen Datenübertragungspfades bzw. teilnehmerseitige Übertragungskoeffizienten des mindestens einen Datenübertragungspfades, welche für eine nach einem Warmstart auszuführende Datenübertragung relevant sind, in mindestens einer vermittlungsseitigen Koeffizientenspeichereinheit bzw. mindestens einer teilnehmerseitigen Koeffizientenspeichereinheit abspeichern; und
(iv) Festlegung von Zeitpunkten, zu welchen jeweils die Vermittlungsseite und/oder die Teilnehmerseite eine Übertragung von zu übertragenden Datenströmen beendet.

Es ist somit ein Vorteil der vorliegenden Erfindung, dass in einfacher Weise eine Aktivierung von in einen Bereitschaftszustand deaktivierten vermittlungsseitigen Sendeempfangseinrichtungen und/oder teilnehmerseitigen Sendeempfangseinrichtungen ermöglicht wird.

Das erfindungsgemäße Verfahren zum Übertragen von zu übertragenden Datenströmen weist im Wesentlichen die folgenden Schritte auf:
a) Bereitstellen eines Deaktivierungssignals durch eine Systemsteuereinrichtung, wenn zu übertragende Datenströme in beiden Datenstromrichtungen keine Nutzdaten enthalten;
b) Speichern von vermittlungsseitigen Übertragungskoeffizienten mindestens eines Datenübertragungspfads in einer vermittlungsseitigen Koeffizientenspeichereinheit der vermittlungsseitigen Sendeempfangseinrichtung;
c) Übertragen des Deaktivierungssignals über den mindestens einen Datenübertragungspfad von der vermittlungsseitigen Sendeempfangseinrichtung zu der teilnehmerseitigen Sendeempfangseinrichtung;
d) Speichern von teilnehmerseitigen Übertragungskoeffizienten des mindestens einen Datenübertragungspfads in einer teilnehmerseitigen Koeffizientenspeichereinheit der teilnehmerseitigen Sendeempfangseinrichtung;
e) Stoppen einer Übertragung von über den mindestens einen Datenübertragungspfad zu übertragenen Datenströmen auf der Vermittlungsseite; und
f) Deaktivieren der teilnehmerseitigen Sendeempfangseinrichtung und der vermittlungsseitigen Sendeempfangseinrichtung jeweils in einen Bereitschaftszustand, wobei das Stoppen einer Übertragung von über den mindestens einen Datenübertragungspfad zu übertragenen Datenströmen auf der Vermittlungsseite in dem Schritt e) dann bereitgestellt wird, wenn Deaktivierungssignal über den mindestens einen Datenübertragungspfad von der teilnehmerseitigen Sendeempfangseinrichtung zu der vermittlungsseitigen Sendeempfangseinrichtung rückübertragen worden ist; und das Deaktivieren der teilnehmerseitigen Sendeempfangseinrichtung und der vermittlungsseitigen Sendeempfangseinrichtung jeweils in einen Bereitschaftszustand in dem Schritt f) dann bereitgestellt wird, wenn der teilnehmerseitigen Sendeempfangseinrichtung ein erstes Synchronisierungsfehlersignal von der vermittlungsseitigen Sendeempfangseinrichtung zugeführt worden ist, woraufhin ein teilnehmerseitiger Übertragungsstopp ausgeführt wird, und der vermittlungsseitigen Sendeempfangseinrichtung ein zweites Synchronisierungsfehlersignal von der teilnehmerseitigen Sendeempfangseinrichtung zugeführt worden ist.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung kann die vermittlungsseitige Sendeempfangseinrichtung das bereitgestellte Deaktivierungssignal während einer Übertragung des mindestens einen zu übertragenden Datenstroms widerrufen, um eine Deaktivierung sowohl der vermittlungsseitigen Sendeempfangseinrichtung als auch der teilnehmerseitigen Sendeempfangseinrichtung zu verhindern.

In vorteilhafter Weise können somit ermittelte Parameter des mindestens einen Datenübertragungspfades für eine Fortsetzung einer Datenübertragung eingesetzt werden.

Gemäß einer weiteren bevorzugten Weiterbildung der vorliegenden Erfindung kann die teilnehmerseitige Sendeempfangseinrichtung das bereitgestellte Deaktivierungssignal während einer Übertragung des mindestens einen zu übertragenden Datenstroms widerrufen, um eine Deaktivierung sowohl der vermittlungsseitigen Sendeempfangseinrichtung als auch der teilnehmerseitigen Sendeempfangseinrichtung zu verhindern.

Es ist vorteilhaft, dass eine teilnehmerseitige Deaktivierung vorgenommen werden kann, da Parameter des mindestens einen Datenübertragungspfades für die weitere Übertragung von zu übertragenen Daten weiterhin bekannt sind.

Die vermittlungsseitige Sendeempfangseinrichtung kann, so lange eine Übertragung von zu übertragenden Datenströmen andauert, in vorteilhafter Weise ein Deaktivierungssignal dadurch widerrufen, dass eine erneute Übertragung einer Nachricht über einen ersten Betriebskanal erfolgt, wobei vorzugsweise eine Nachricht ID21 gewählt wird, wobei in einem zweiten Byte ein spezifisches Bit gesetzt wird, das in der Nachricht zuvor nicht gesetzt war.

In umgekehrter Weise besteht ein Vorteil, dass die teilnehmerseitige Sendeempfangseinrichtung bei einer Übertragung von zu übertragenden Datenströmen in einem zweiten Betriebskanal eine Deaktivierung von übertragenen Datenströmen dadurch verhindern kann, dass eine Nachricht, d.h. ein Bit ID148 gesetzt wird, das in einem herkömmlichen Deaktivierungssignal nicht gesetzt ist.

Gemäß noch einer weiteren bevorzugten Weiterbildung der vorliegenden Erfindung können sowohl die vermittlungsseitige Sendeempfangseinrichtung als auch die teilnehmerseitige Sendeempfangseinrichtung über den ersten Betriebskanal bzw. den zweiten Betriebskanal Parameter für den Bereitschaftszustand und/oder einen darauffolgenden Warmstart vorgeben.

Gemäß noch einer weiteren bevorzugten Weiterbildung der vorliegenden Erfindung ist durch die vermittlungsseitige Sendeempfangseinrichtung und/oder die teilnehmerseitige Sendeempfangseinrichtung ein Bereitschaftszustand unterbrechbar, um Eigenschaften des mindestens einen Datenübertragungspfades zu überprüfen.

In vorteilhafter Weise kann somit festgestellt werden, ob sich Leitungseigenschaften geändert haben, wobei bei einer Änderung der Leitungseigenschaften vermittlungsseitige Übertragungskoeffizienten in der vermittlungsseitigen Koeffizientenspeichereinheit adaptiert werden können, bzw. teilnehmerseitige Übertragungskoeffizienten in der teilnehmerseitigen Koeffizientenspeichereinheit adaptiert werden können.

Gemäß noch einer weiteren bevorzugten Weiterbildung der vorliegenden Erfindung werden durch die vermittlungsseitige Sendeempfangseinrichtung und/oder die teilnehmerseitige Sendeempfangseinrichtung Signale angefordert, mit welchen eine Echoeliminationseinrichtung und/oder eine Entzerrungseinrichtung an Eigenschaften des mindestens einen Datenübertragungspfades angepasst werden.

In vorteilhafter Weise wird somit zugelassen, dass für einen Warmstart mindestens eine Echoeliminationseinrichtung und/oder mindestens eine Entzerrungseinrichtung "trainiert" werden können, falls sich die Leitungseigenschaften des mindestens einen Datenübertragungspfades geändert haben. Es ist weiterhin zweckmäßig, dass diese Signale mit Hilfe von Nachrichten über den ersten Betriebskanal und den zweiten Betriebskanal in ihrer Art und Zeitdauer spezifiziert werden können.

Die erfindungsgemäße Vorrichtung zur Übertragung von zu übertragenden Datenströmen, bei der mindestens eine Sendeempfangseinrichtung in einen Bereitschaftszustand deaktivierbar ist, ist weiterhin versehen mit:
a) einer vermittlungsseitigen Sendeempfangseinrichtung zum Senden und zum Empfangen von zu übertragenden Datenströmen;
b) einer teilnehmerseitigen Sendeempfangseinrichtung zum Senden und zum Empfangen von zu übertragenden Datenströmen;
c) mindestens einem Datenübertragungspfad, welcher einen ersten Betriebskanal und einen zweiten Betriebskanal aufweist, und welcher die vermittlungsseitige Sendeempfangseinrichtung und die teilnehmerseitige Sendeempfangseinrichtung zur Übertragung von zu übertragenden Datenströmen miteinander verbindet;
d) einer Systemsteuereinrichtung, die derart ausgebildet ist, der vermittlungsseitigen Sendeempfangseinrichtung ein Deaktivierungssignal dann bereitzustellen, wenn der zu übertragende Datenstrom keine Nutzdaten enthält;
e) einer vermittlungsseitigen Koeffizientenspeichereinheit zur Speicherung von vermittlungsseitigen Übertragungskoeffizienten des mindestens einen Datenübertragungspfads in der vermittlungsseitigen Sendeempfangseinrichtung in Abhängigkeit von dem von der Systenmsteuereinrichtung bereitgestellten Deaktivierungssignal; und
f) einer teilnehmerseitigen Koeffizientenspeichereinheit zur Speicherung von teilnehmerseitigen Übertragungskoeffizienten des mindestens einen Datenübertragungspfads in der teilnehmerseitigen Sendeempfangseinrichtung in Abhängigkeit von dem von der Systenmsteuereinrichtung bereitgestellten und zu der teilnehmerseitigen Sendeempfangseinrichtung über den ersten Betriebskanal des mindestens einen Datenübertragungspfads übertragenen Deaktivierungssignal, wobei die vermittlungsseitige Sendeempfangseinrichtung derart ausgebildet ist, dass das Deaktivierungssignal von der teilnehmerseitigen Sendeempfangseinrichtung über den zweiten Betriebskanal des mindestens einen Datenübertragungspfads zu der vermittlungsseitigen Sendeempfangseinrichtung rückübertragbar ist; und dass der vermittlungsseitigen Sendeempfangseinrichtung nach einem teilnehmerseitigen Übertragungsstopp ein von der teilnehmerseitigen Sendeempfangseinrichtung bereitgestelltes, zweites Synchronisierungsfehlersignal zuführbar ist, derart, dass ein vermittlungsseitiger Bereitschaftszustand herbeigeführt wird;
und die teilnehmerseitige Sendeempfangseinrichtung derart ausgebildet ist, dass der teilnehmerseitigen Sendeempfangseinrichtung nach einem vermittlungsseitigen Übertragungsstopp ein von der vermittlungsseitigen Sendeempfangseinrichtung bereitgestelltes, erstes Synchronisierungsfehlersignal zuführbar ist, derart, dass der teilnehmerseitige Übertragungsstopp und ein teilnehmerseitiger Bereitschaftszustand herbeigeführt werden.

Ein Ausführungsbeispiel der Erfindung ist in der Zeichnung dargestellt und in der nachfolgenden Beschreibung näher erläutert.

In der Zeichnung zeigt:

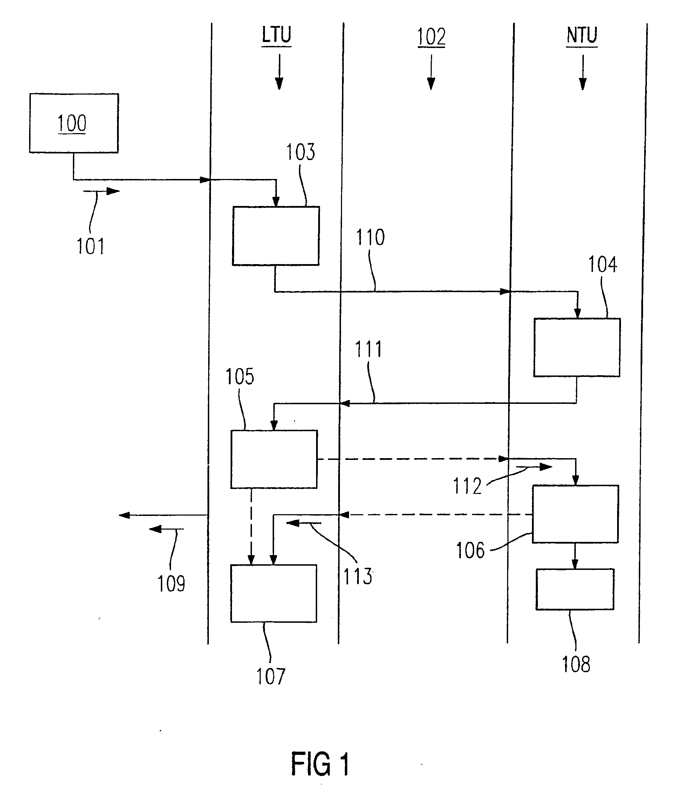

- Figur 1: ein Blockdiagramm eines Verfahrens zum Übertragen von zu übertragenden Datenströmen, bei dem mindestens eine Sendeempfangseinrichtung in einen Bereitschaftszustand deaktivierbar ist, gemäß einem Ausführungsbeispiel der vorliegenden Erfindung.

In dem in Figur 1 gezeigten Blockbild gemäß einem Ausführungsbeispiel der vorliegenden Erfindung ist eine vermittlungsseitige Sendeempfangseinrichtung LTU (links) und eine teilnehmerseitige Sendeempfangseinrichtung NTU (rechts) gezeigt, welche durch einen Datenübertragungspfad 102 verbunden sind.

Der Datenübertragungspfad ist aus einem ersten Betriebskanal 110 für eine Übertragung von zu übertragenden Datenströmen von der vermittlungsseitigen Sendeempfangseinrichtung LTU zu der teilnehmerseitigen Sendeempfangseinrichtung NTU und einem zweiten Betriebskanal 111 für eine Übertragung von zu übertragenden Daten von der teilnehmerseitigen Sendeempfangseinrichtung NTU zu der vermittlungsseitigen Sendeemofangseinrichtung LTU ausgebildet.

Wird von einer in einer Systemsteuereinrichtung 100 enthaltenen Software festgestellt, dass der übertragene Datenstrom keine Nutzdaten enthält, wird ein Deaktivierungssignal 101 von der Systemsteuereinrichtung 100 ausgegeben. Dieses Systemsteuersignal 101 wird einer vermittlungsseitigen Koeffizientenspeichereinheit 103 zugeführt, welche sämtliche für eine Übertragung von zu übertragenden Daten relevanten vermittlungsseitigen Übertragungskoeffizienten des mindestens einen Datenübertragungspfades speichert, wodurch ein darauffolgender Warmstart mit den relevanten Übertragungskoeffizienten gesichert ist.

Nachfolgend überträgt die vermittlungsseitige Sendeempfangseinrichtung LTU eine beispielsweise mit einer Identifikation ID21 versehene Nachricht über den ersten Betriebskanal 110. Die über die ersten und zweiten Betriebskanäle 110 bzw. 111 übertragenen Nachrichten für eine Deaktivierung der vermittlungsseitigen Sendeempfangseinrichtung LTU bzw. der teilnehmerseitigen Sendeempfangseinrichtung NTU sind wie folgt aufgebaut.

| | | | | | | | | |
|---|---|---|---|---|---|---|---|---|
| 1. Byte | Message ID21 oder 149 | | | | | | | |
| 2. Byte | NoD | EC | LP | KAS | 0 | 0 | 0 | 0 |

- NoD="1":: Deaktivierung nicht möglich (NTU) bzw. wird widerrufen (LTU)
- NoD="0":: Deaktivierung wird angefordert (LTU) bzw. bestätigt (NTU)
- EC="1":: Zeit für Echocancellation beim Warmstart erforderlich
- LP="1":: Signal für "Line Probing" wird gefordert
- KAS="1":: "Keep alive signals" während Powerdown gefordert
- EC, LP, KAS="0":: Segmente werden weggelassen.

Es sei darauf hingewiesen, dass an Stelle einer Nachricht mit einer Identifikation ID21 auch jedwede andere Identifikation IDxx eingesetzt werden kann, vorausgesetzt, dass diese Identifikation bisher unbenutzt ist.

Nach einem Empfang der über den ersten Betriebskanal 110 übertragenen Nachricht, d.h. des Deaktivierungssignals 101 durch die teilnehmerseitige Sendeempfangseinrichtung NTU, wird, ebenso wie vorher unter Bezugnahme auf die vermittlungsseitige Sendeempfangseinrichtung LTU erläutert, eine Speicherung von teilnehmerseitigen Übertragungskoeffizienten in einer teilnehmerseitigen Koeffizientenspeichereinheit 104 der teilnehmerseitigen Sendeempfangseinrichtung NTU vorgenommen.

Ein Empfang des Deaktivierungssignals 101 und eine Speicherung der teilnehmerseitigen Übertragungskoeffizienten in der teilnehmerseitigen Koeffizientenspeichereinheit 104 wird mit einer Nachricht von der teilnehmerseitigen Sendeempfangseinrichtung NTU zu der vermittlungsseitigen Sendeempfangseinrichtung LTU über einen zweiten Betriebskanal 111 bestätigt, wobei die Nachricht beispielsweise eine Identifikation ID149 aufweist, die in obenstehender Tabelle erläutert ist.

Es sei darauf hingewiesen, dass an Stelle einer Identifikation ID149 jedwede andere Identifikation eingesetzt werden kann, vorausgesetzt, dass diese eine bisher nicht benutzte ID darstellt.

Bei einem Empfang der ID149-Nachricht über den zweiten Betriebskanal 111 wird eine Übertragung von Datenströmen durch die vermittlungsseitige Sendeempfangseinrichtung LTU angehalten, was in der Figur 1 durch einen Block 105 veranschaulicht ist.

Die teilnehmerseitige Sendeempfangseinrichtung NTU erkennt nun den Ausfall eines "Far End"-Signals (Signal vom fernen Ende) dadurch, dass eine Synchronisierung verloren geht, d.h. ein erstes Synchronisierungsfehlersignal 112 wird der teilnehmerseitigen Sendeempfangseinrichtung NTU bereitgestellt, woraufhin ein teilnehmerseitiger Übertragungsstopp bereitgestellt wird, was in dem Blockbild der Figur 1 durch einen Block 106 veranschaulicht ist.

Anschließend geht die teilnehmerseitige Sendeempfangseinrichtung in einen Energiesparmodus, d.h. in einen Bereitschaftszustand der teilnehmerseitigen Sendeempfangseinrichtung über, was in dem Blockbild der Figur 1 durch einen Block 108 veranschaulicht ist.

In ähnlicher Weise erkennt die vermittlungsseitige Sendeempfangseinrichtung einen Ausfall eines "Far End"-Signals (Signal vom fernen Ende, d.h. jetzt von der teilnehmerseitigen Sendeempfangseinrichtung) durch einen Verlust einer Synchronisierung, d.h. es wird der vermittlungsseitigen Sendeempfangseinrichtung LTU ein zweites Synchronisierungsfehlersignal 113 bereitgestellt, woraufhin die vermittlungsseitige Sendeempfangseinrichtung ebenfalls in einen Energiesparmodus, d.h. einen vermittlungsseitigen Bereitschaftszustand übergeht, was in dem Blockbild der Figur 1 durch einen Block 107 veranschaulicht ist.

Von der vermittlungsseitigen Sendeempfangseinrichtung LTU ist weiterhin ein Deaktivierungsbestätigungssignal 109 ausgebbar, welches der Systemsteuereinheit 100 für eine Bestätigung und/oder weiteren Schaltungseinheiten zugeführt werden kann.

Durch das erfindungsgemäße Verfahren und die erfindungsgemäße Vorrichtung zum Übertragen von zu übertragenden Datenströmen ist es somit möglich, eine Deaktivierung von vermittlungsseitigen Sendeempfangseinrichtungen und/oder teilnehmerseitigen Sendeempfangseinrichtungen in einen Bereitschaftszustand effizient auszuführen, so dass ein anschließender Warmstart durchgeführt werden kann, ohne dass eine langwierige Adaption auf Leitungseigenschaften des mindestens einen Übertragungspfades erforderlich ist, wobei in vorteilhafter Weise eine Energieeinsparung sowohl in der vermittlungsseitigen Sendeempfangseinrichtung als auch in der teilnehmerseitigen Sendeempfangseinrichtung bereitgestellt wird.

Obwohl die vorliegende Erfindung vorstehend anhand bevorzugter Ausführungsbeispiele beschrieben wurde, ist sie darauf nicht beschränkt, sondern auf vielfältige Weise modifizierbar.

## Patentansprüche

1. Verfahren zum Übertragen von zu übertragenden Datenströmen, bei dem mindestens eine Sendeempfangseinrichtung (LTU, NTU) in einen Bereitschaftszustand deaktivierbar ist, mit den Schritten:
a) Bereitstellen eines Deaktivierungssignals (101) durch eine Systemsteuereinrichtung (100), wenn zu übertragende Datenströme in beiden Datenstromrichnungen keine Nutzdaten enthalten;
b) Speichern von vermittlungsseitigen Übertragungskoeffizienten mindestens eines Datenübertragungspfads (102) in einer vermittlungsseitigen Koeffizientenspeichereinheit (103) der vermittlungsseitigen Sendeempfangseinrichtung (LTU);
c) Übertragen des Deaktivierungssignals (101) über den mindestens einen Datenübertragungspfad (102) von der vermittlungsseitigen Sendeempfangseinrichtung (LTU) zu der teilnehmerseitigen Sendeempfangseinrichtung (NTU);
d) Speichern von teilnehmerseitigen Übertragungskoeffizienten des mindestens einen Datenübertragungspfads (102) in einer teilnehmerseitigen Koeffizientenspeichereinheit (104) der teilnehmerseitigen Sendeempfangseinrichtung (NTU);
e) Stoppen (105) einer Übertragung von über den mindestens einen Datenübertragungspfad (102) zu übertragenen Datenströmen auf der Vermittlungsseite; und
f) Deaktivieren der teilnehmerseitigen Sendeempfangseinrichtung (NTU) und der vermittlungsseitigen Sendeempfangseinrichtung (LTU) jeweils in einen Bereitschaftszustand (107, 108),
**dadurch gekennzeichnet, dass**
g) das Stoppen (105) einer Übertragung von über den mindestens einen Datenübertragungspfad (102) zu übertragenen Datenströmen auf der Vermittlungsseite in dem Schritt e) dann bereitgestellt wird, wenn das Deaktivierungssignal (101) über den mindestens einen Datenübertragungspfad (102) von der teilnehmerseitigen Sendeempfangseinrichtung (NTU) zu der vermittlungsseitigen Sendeempfangseinrichtung (LTU) rückübertragen worden ist; und
h) das Deaktivieren der teilnehmerseitigen Sendeempfangseinrichtung (NTU) und der vermittlungsseitigen Sendeempfangseinrichtung (LTU) jeweils in einen Bereitschaftszustand (107, 108) in dem Schritt f) dann bereitgestellt wird, wenn
h1) der teilnehmerseitigen Sendeempfangseinrichtung (NTU) ein erstes Synchronisierungsfehlersignal (112) von der vermittlungsseitigen Sendeempfangseinrichtung (LTU) zugeführt worden ist, woraufhin ein teilnehmerseitiger Übertragungsstopp (106) ausgeführt wird, und
h2) der vermittlungsseitigen Sendeempfangseinrichtung (LTU) ein zweites Synchronisierungsfehlersignal (113) von der teilnehmerseitigen Sendeempfangseinrichtung (NTU) zugeführt worden ist.

2. Verfahren nach Anspruch 1,
**dadurch gekennzeichnet,**
**dass** die vermittlungsseitige Sendeempfangseinrichtung (LTU) das bereitgestellte Deaktivierungssignal (101) während einer Übertragung des mindestens einen zu übertragenden Datenstroms widerrufen kann, um eine Deaktivierung sowohl der vermittlungsseitigen Sendeempfangseinrichtung (LTU) als auch der teilnehmerseitigen Sendeempfangseinrichtung (NTU) zu verhindern.

3. Verfahren nach einem oder beiden der Ansprüche 1 und 2,
**dadurch gekennzeichnet,**
**dass** die teilnehmerseitige Sendeempfangseinrichtung (NTU) das bereitgestellte Deaktivierungssignal (101) während einer Übertragung des mindestens einen zu übertragenden Datenstroms widerrufen kann, um eine Deaktivierung sowohl der vermittlungsseitigen Sendeempfangseinrichtung (LTU) als auch der teilnehmerseitigen Sendeempfangseinrichtung (NTU) zu verhindern.

4. Verfahren nach einem oder mehreren der voranstehenden Ansprüche,
**dadurch gekennzeichnet,**
**dass** sowohl die vermittlungsseitige Sendeempfangseinrichtung (LTU) als auch die teilnehmerseitige Sendeempfangseinrichtung (LTU) über erste und zweite Betriebskanäle (110, 111) des mindestens einen Datenübertragungspfads (102) Parameter für den Bereitschaftszustand und/oder einen darauffolgenden Warmstart vorgeben können.

5. Verfahren nach einem oder mehreren der voranstehenden Ansprüche,
**dadurch gekennzeichnet,**
**dass** durch die vermittlungsseitige Sendeempfangseinrichtung (LTU) und/oder die teilnehmerseitige Sendeempfangseinrichtung (LTU) ein Bereitschaftszustand unterbrechbar ist, um Eigenschaften des Datenübertragungspfads (102) zu überprüfen.

6. Verfahren nach einem oder mehreren der voranstehenden Ansprüche,
**dadurch gekennzeichnet,**
**dass** bei einer Deaktivierung durch die vermittlungsseitige Sendeempfangseinrichtung (LTU) und/oder die teilnehmerseitige Sendeempfangseinrichtung (LTU) Signale angefordert werden, mit welchen eine Echoeliminationseinrichtung und/oder eine Entzerrungseinrichtung an Eigenschaften des Datenübertragungspfads (102) angepasst werden.

7. Vorrichtung zur Übertragung von zu übertragenden Datenströmen, bei der mindestens eine Sendeempfangseinrichtung (LTU, NTU) in einen Bereitschaftszustand deaktivierbar ist, mit:
a) einer vermittlungsseitigen Sendeempfangseinrichtung (LTU) zum Senden und zum Empfangen von zu übertragenden Datenströmen;
b) einer teilnehmerseitigen Sendeempfangseinrichtung (NTU) zum Senden und zum Empfangen von zu übertragenden Datenströmen;
c) mindestens einem Datenübertragungspfad (102), welcher einen ersten Betriebskanal (110) und einen zweiten Betriebskanal (111) aufweist, und welcher die vermittlungsseitige Sendeempfangseinrichtung (LTU) und die teilnehmerseitige Sendeempfangseinrichtung (NTU) zur Übertragung von zu übertragenden Datenströmen miteinander verbindet ;
d) einer Systemsteuereinrichtung (100), die derart ausgebildet ist, der vermittlungsseitigen Sendeempfangseinrichtung (LTU) ein Deaktivierungssignal (101) dann bereitzustellen, wenn der zu übertragende Datenstrom keine Nutzdaten enthält;
e) einer vermittlungsseitigen Koeffizientenspeichereinheit (103) zur Speicherung von vermittlungsseitigen Übertragungskoeffizienten des mindestens einen Datenübertragungspfads (102) in der vermittlungsseitigen Sendeempfangseinrichtung (LTU) in Abhängigkeit von dem von der Systenmsteuereinrichtung (100) bereitgestellten Deaktivierungssignal (101); und
f) einer teilnehmerseitigen Koeffizientenspeichereinheit (104) zur Speicherung von teilnehmerseitigen Übertragungskoeffizienten des mindestens einen Datenübertragungspfads (102) in der teilnehmerseitigen Sendeempfangseinrichtung (NTU) in Abhängigkeit von dem von der Systenmsteuereinrichtung (100) bereitgestellten und zu der teilnehmerseitigen Sendeempfangseinrichtung (NTU) über den ersten Betriebskanal (110) des mindestens einen Datenübertragungspfads (102) übertragenen Deaktivierungssignal (101),
**dadurch g**ekennzeichnet, dass
g) die vermittlungsseitige Sendeempfangseinrichtung (LTU) derart ausgebildet ist,
g1) dass das Deaktivierungssignal (101) von der teilnehmerseitigen Sendeempfangseinrichtung (NTU) über den zweiten Betriebskanal (111) des mindestens einen Datenübertragungspfads (102) zu der vermittlungsseitigen Sendeempfangseinrichtung (LTU) rückübertragbar ist; und
g2) dass der vermittlungsseitigen Sendeempfangseinrichtung (LTU) nach einem teilnehmerseitigen Übertragungsstopp (106) ein von der teilnehmerseitigen Sende empfangseinrichtung (NTU) bereitgestelltes, zweites Synchronisierungsfehlersignal (113) zuführbar ist, derart, dass ein vermittlungsseitiger Bereitschaftszustand (107) herbeigeführt wird; und
h) die teilnehmerseitige Sendeempfangseinrichtung (NTU) derart ausgebildet ist, dass der teilnehmerseitigen Sendeempfangseinrichtung (NTU) nach einem vermittlungsseitigen Übertragungsstopp (105) ein von der vermittlungsseitigen Sendeempfangseinrichtung (LTU) bereitgestelltes, erstes Synchronisierungsfehlersignal (112) zuführbar ist, derart, dass der teilnehmerseitige Übertragungsstopp (106) und ein teilnehmerseitiger Bereitschaftszustand (108) herbeigeführt werden.

## Claims

1. Method for transmission of data streams which are to be transmitted, in which at least one transmitting/receiving device (LTU, NTU) can be deactivated to a standby state, having the following steps:
a) provision of a deactivation signal (101) by means of a system control device (100) when data streams which are to be transmitted do not contain any payload data in either of the two data stream directions;
b) storage of exchange-end transmission coefficients for at least one data transmission path (102) in an exchange-end coefficient memory unit (103) in the exchange-end transmitting/receiving device (LTU);
c) transmission of the deactivation signal (101) via the at least one data transmission path (102) from the exchange-end transmitting/receiving device (LTU) to the subscriber-end transmitting/receiving device (NTU);
d) storage of subscriber-end transmission coefficients for the at least one data transmission path (102) in a subscriber-end coefficient memory unit (104) in the subscriber-end transmitting/receiving device (NTU);
e) stopping (105) of the transmission of data streams, which are to be transmitted via the at least one data transmission path (102), at the exchange end; and
f) deactivation of the subscriber-end transmitting/receiving device (NTU) and of the exchange-end transmitting/receiving device (LTU) to a standby state (107, 108) in each case
**characterized in that**
g) the stopping (105) of a transmission of data streams which are to be transmitted via the at least one data transmission path (102) is provided in the step e) at the exchange end when the deactivation signal (101) has been transmitted back to the exchange-end transmitting/ receiving device (LTU) via the at least one data transmission path (102) from the subscriber-end transmitting/receiving device (NTU); and
h) the deactivation of the subscriber-end transmitting/receiving device (NTU) and of the exchange-end transmitting/receiving device (LTU) is in each case provided to a standby mode (107, 108) in the step f), when
h1) the subscriber-end transmitting/receiving device (NTU) has been supplied with a first synchronization error signal (112) from the exchange-end transmitting/ receiving device (LTU), in response to which a subscriber-end transmission stop (106) is carried out, and
h2) the exchange-end transmitting/receiving device (LTU) has been supplied with a second synchronization error signal (113) from the subscriber-end transmitting/receiving device (NTU) .

2. Method according to claim 1,
**characterized in that**
the exchange-end transmitting/receiving device (LTU) can cancel the deactivation signal (101) which has been provided, during transmission of the at least one data stream which is to be transmitted, in order to prevent deactivation of both the exchange-end transmitting/receiving device (LTU) and of the subscriber-end transmitting/receiving device (NTU).

3. Method according to one or both of claims 1 and 2,
**characterized in that**
the subscriber-end transmitting/receiving device (NTU) can cancel the deactivation signal (101) which has been provided, during transmission of the at least one data stream which is to be transmitted, in order to prevent deactivation of both the exchange-end transmitting/receiving device (LTU) and of the subscriber-end transmitting/receiving device (NTU).

4. Method according to one or more of the preceding claims,
**characterized in that**
both the exchange-end transmitting/receiving device (LTU) and the subscriber-end transmitting/receiving device (NTU) can use first and second operational channels (110, 111) of the at least one data transmission path (102) to preset parameters for the standby state and/or for a subsequent hot start.

5. Method according to one or more of the preceding claims,
**characterized in that**
a standby state can be interrupted by the exchange-end transmitting/receiving device (LTU) and/or by the subscriber-end transmitting/receiving device (NTU) in order to check characteristics of the data transmission path (102).

6. Method according to one or more of the preceding claims,
**characterized in that**
on deactivation by the exchange-end transmitting/receiving device (LTU) and/or by the subscriber-end transmitting/receiving device (NTU), signals are requested by means of which an echo elimination device and/or an equalization device are/is matched to characteristics of the data transmission path (102).

7. Apparatus for transmission of data streams which are to be transmitted, in which at least one transmitting/receiving device (LTU, NTU) can be deactivated to a standby state, having:
a) an exchange-end transmitting/receiving device (LTU) for transmitting and receiving data streams which are to be transmitted;
b) a subscriber-end transmitting/receiving device (NTU) for transmitting and receiving data streams to be transmitted;
c) at least one data transmission path (102), which has a first operational channel (110) and a second operational channel (111) and which connects the exchange-end transmitting/receiving device (LTU) and the subscriber-end transmitting/receiving device (NTU) to one another for transmission of data streams which are to be transmitted;
d) a system control device (100), which is designed such that it produces a deactivation signal (101) from the exchange-end transmitting/receiving device (LTU) when the data stream which is to be transmitted does not contain any payload data;
e) an exchange-end coefficient memory unit (103) for storage of exchange-end transmission coefficients for the at least one data transmission path (102) in the exchange-end transmitting/receiving device (LTU) as a function of the deactivation signal (101) produced by the system control device (100); and
f) a subscriber-end coefficient memory unit (104) for storage of subscriber-end transmission coefficients for the at least one data transmission path (102) in the subscriber-end transmitting/receiving device (NTU) as a function of the deactivation signal (101), which is produced by the system control device (100) and is transmitted to the subscriber-end transmitting/ receiving device (NTU) via the first operational channel (110) of the at least one data transmission path (102),
**characterized in that**
g) the exchange-end transmitting/receiving device (LTU) is designed such
g1) that the deactivation signal (101) can be transmitted back from the subscriber-end transmitting/ receiving device (NTU) via the second operational channel (111) of the at least one data transmission path (102) to the exchange-end transmitting/receiving device (LTU); and
g2) that, after a subscriber-end transmission stop (106), the exchange-end transmitting/receiving device (LTU) can be supplied with a second synchronization error signal (113), which is produced by the subscriber-end transmitting/receiving device (NTU), so as to bring about an exchange-end standby state (107); and
h) the subscriber-end transmitting/receiving device (NTU) is designed such that, after an exchange-end transmission stop (105), the subscriber-end transmitting/receiving device (NTU) can be supplied with a first synchronization error signal (112), which is produced by the exchange-end transmitting/receiving device (LTU), such that the subscriber-end transmission stop (106) and a subscriber-end standby state (108) are brought about.

## Revendications

1. Procédé pour la transmission de flux de données à transmettre dans lequel au moins un dispositif d'émission-réception (LTU, NTU) peut être désactivé dans un état d'attente, comprenant les étapes :
a) mise à disposition d'un signal de désactivation (101) par un dispositif de commande de système (100) lorsque aucune donnée d'utilisation n'est contenue dans des flux de données à transmettre dans les deux directions de flux de données ;
b) mémorisation de coefficients de transmission côté opérateur d'au moins un chemin de transmission de données (102) dans une unité de mémoire de coefficients (103) côté opérateur du dispositif d'émission-réception côté opérateur (LTU) ;
c) transmission du signal de désactivation (101) via le au moins un chemin de transmission de données (102) du dispositif d'émission-réception côté opérateur (LTU) vers le dispositif d'émission-réception côté utilisateur (NTU);
d) mémorisation de coefficients de transmission côté utilisateur du au moins un chemin de transmission de données (102) dans une unité de mémoire de coefficient (104) côté utilisateur du dispositif d'émission-réception côté utilisateur (NTU) ;
e) arrêt (105) d'une transmission de flux de données à transmettre via le au moins un chemin de transmission de données (102) vers le côté opérateur ; et
f) désactivation du dispositif d'émission-réception côté utilisateur (NTU) et du dispositif d'émission-réception côté opérateur (LTU) chacun dans un état d'attente (107, 108),
**caractérisé en ce que**
g) l'arrêt (105) d'une transmission de flux de données à transmettre via le au moins un chemin de transmission de données (102) côté opérateur est mis en place dans l'étape e), lorsque le signal de désactivation (101) a été renvoyé, via le au moins un chemin de transmission de données (102), du dispositif d'émission-réception côté utilisateur (NTU) vers le dispositif d'émission-réception côté opérateur (LTU); et que
h) la désactivation du dispositif d'émission-réception côté utilisateur (NTU) et du dispositif d'émission-réception côté opérateur (LTU) chacun dans un état d'attente est ensuite mise en place dans l'étape f), lorsque
h1) un premier signal d'erreur de synchronisation (112) a été envoyé au dispositif d'émission-réception côté utilisateur (NTU) par le dispositif d'émission-réception côté opérateur (LTU), suite à quoi un arrêt de transmission côté utilisateur (106) est exécuté, et que
h2) un deuxième signal d'erreur de synchronisation (113) a été envoyé au dispositif d'émission-réception côté opérateur (LTU) par le dispositif d'émission-réception côté utilisateur (NTU).

2. Procédé selon la revendication 1, **caractérisé en ce que** le dispositif d'émission-réception côté opérateur (LTU) peut révoquer le signal de désactivation (101) mis à disposition lors d'une transmission de l'au moins un flux de données à transmettre afin d'éviter une désactivation aussi bien du dispositif d'émission-réception côté opérateur (LTU) que du dispositif d'émission-réception côté utilisateur (NTU).

3. Procédé selon la revendication 1 ou 2,
**caractérisé en ce que**
le dispositif d'émission-réception côté utilisateur (NTU) peut révoquer le signal de désactivation (101) mis à disposition pendant une transmission de l'au moins un flux de données à transmettre afin d'éviter une désactivation aussi bien du dispositif d'émission-réception côté opérateur (LTU) que du dispositif d'émission-réception côté utilisateur (NTU).

4. Procédé selon une ou plusieurs des revendications précédentes,
**caractérisé en ce que**
aussi bien le dispositif d'émission-réception côté opérateur (LTU) que le dispositif d'émission-réception côté utilisateur (NTU) peuvent fixer des paramètres pour l'état d'attente et/ou un démarrage à chaud qui lui succède via des premiers et des deuxièmes canaux opérationnels (110, 111) du au moins un chemin de transmission de données (102).

5. Procédé selon une ou plusieurs des revendications précédentes,
**caractérisé en ce que**
un état d'attente peut être interrompu par le dispositif d'émission-réception côté opérateur (LTU) et/ou le dispositif d'émission-réception côté utilisateur (NTU) pour vérifier des propriétés du chemin de transmission de données (102).

6. Procédé selon une ou plusieurs des revendications précédentes,
**caractérisé en ce que**
lors d'une désactivation, des signaux sont requis par le dispositif d'émission-réception côté opérateur (LTU) et/ou le dispositif d'émission-réception côté utilisateur (NTU) avec lesquels un dispositif d'élimination d'écho et/ou un dispositif de correction sont adaptés à des propriétés du chemin de transmission de données (102).

7. Dispositif pour transmettre des flux de données à transmettre dans lequel au moins un dispositif d'émission-réception (LTU, NTU) peut être désactivé dans un état d'attente, comprenant :
a) un dispositif d'émission-réception côté opérateur (LTU) pour l'émission et la réception de flux de données à transmettre ;
b) un dispositif d'émission-réception côté utilisateur (NTU) pour l'émission et la réception de flux de données à transmettre ;
c) au moins un chemin de transmission de données (102) qui comprend un premier canal opérationnel (110) et un deuxième canal opérationnel (111) et qui relie le dispositif d'émission-réception côté opérateur (LTU) et le dispositif d'émission-réception côté utilisateur (NTU) pour la transmission de flux de données à transmettre ;
d) un dispositif de commande de système (100), construit de telle façon qu'un signal de désactivation (101) est mis à disposition pour le dispositif d'émission-réception côté opérateur (LTU) lorsque le flux de données à transmettre ne contient aucune donnée d'utilisation ;
e) une unité de mémorisation de coefficients côté opérateur (103) pour mémoriser des coefficients de transmission côté opérateur du au moins un chemin de transmission de données (102) dans le dispositif d'émission-réception côté opérateur (LTU) en fonction du signal de désactivation (101) mis à disposition par le dispositif de commande de système (100) ; et
f) une unité de mémorisation de coefficients côté utilisateur (104) pour mémoriser des coefficients de transmission côté utilisateur du au moins un chemin de transmission de données (102) dans le dispositif d'émission-réception côté utilisateur (NTU) en fonction du signal de désactivation (101) mis à disposition par le dispositif de commande de système (100) et transmis au dispositif d'émission-réception côté utilisateur (NTU) via le premier canal opérationnel (110) du au moins un chemin de transmission de données (102),
**caractérisé en ce que**
g) le dispositif d'émission-réception côté opérateur (LTU) est construit de telle façon que
g1) le signal de désactivation (101) peut être renvoyé du dispositif d'émission-réception côté utilisateur (NTU) au dispositif d'émission-réception côté opérateur (LTU) via le deuxième canal opérationnel (111) du au moins chemin de transmission de données (102) ; et que
g2) un deuxième signal d'erreur (113) de synchronisation mis à disposition par le dispositif d'émission-réception côté utilisateur (NTU) après un arrêt (106) de transmission côté utilisateur peut être envoyé au dispositif d'émission-réception côté opérateur (LTU) de façon à provoquer un état d'attente (107) côté opérateur ; et
h) le dispositif d'émission-réception côté utilisateur (NTU) est construit de telle façon qu'un premier signal d'erreur de synchronisation (112) mis à disposition par le dispositif d'émission-réception côté opérateur (LTU) peut être envoyé au dispositif d'émission-réception côté utilisateur (NTU) après un arrêt de transmission côté opérateur (105) de façon à provoquer l'arrêt de transmission (106) côté utilisateur et un état d'attente côté utilisateur (108).
